# EUROPÄISCHE PATENTSCHRIFT

(11) **EP 1 349 690 B1**
(45) Veröffentlichungstag und Bekanntmachung des Hinweises auf die Patenterteilung: **20.04.2005**
(21) Anmeldenummer: 01991882.0
(22) Anmeldetag: 22.12.2001
(51) Int. Cl.: B23B 51/10

(54) **BOHR-FAS-WERKZEUG**
DRILL/CHAMFER TOOL
OUTIL DE PERCAGE A FACE DE COUPE

(30) Priorität: 13.01.2001 DE 10101420
(43) Veröffentlichungstag der Anmeldung: 08.10.2003
(73) Patentinhaber: KENNAMETAL INC., Latrobe, PA 15650-0231 (US)
(72) Erfinder: JÄGER, Horst, 90451 Nürnberg (DE); ZEUG, Berthold, 90762 Fürth (DE)
(74) Vertreter: Tergau & Pohl Patentanwälte
(86) Internationale Anmeldenummer: PCT/EP2001/015299
(87) Internationale Veröffentlichungsnummer: WO 2002/055244

(56) Entgegenhaltungen:
- EP-B- 0 647 166
- FR-A- 2 369 775
- US-A- 2 661 642
- US-A- 4 353 670

## Beschreibung

Die Erfindung betrifft ein Bohr-Fas-Werkzeug mit einem den drallgenuteten Schaftteil eines Bohrers umgebenden und auf diesem in beliebigen axialen Verstellpositionen fixierbaren Klemmring als Halter einer Senkerschneide oder eines Senkerschneidkörpers.

Ein aus DE-U-72 46 625 bekanntes Werkzeug der eingangs genannten Art enthält neben einem den Bohrer umgebenden und mit einer Senkerschneide versehenen Senkerkörper ein den Bohrer ebenfalls umgebendes und mit diesem in Axialrichtung des Bohrers verschraubbares Spannglied. Dieses Spannglied verspannt den Senkerkörper am Bohrer mittels den Drallnuten des Bohrers angepasster und in diesen geführter Kugeln. Die Fixiereinrichtung ist baulich aufwändig.

Weitere Lösungswege zur in beliebigen axialen Verstellpositionen vorzunehmenden Fixierung eines solchen Senkerkörpers sind aus EP 0 687 516 A1 oder EP 0 647 166 B1 bekannt. Diese Vorrichtungen spannen den Senkerkörper mittelbar über eine zwischen dem Bohrer und dem Senkerkörper einliegende, den Bohrer umgebende Spannhülse. Auch diese Lösungen sind konstruktiv aufwändig.

Der Erfindung liegt die Aufgabe zugrunde, ein Bohr-Fas-Werkzeug der eingangs genannten Art einfacher auszubilden. Die Lösung dieser Aufgabe ist im Anspruch 1 niedergelegt. Bei ihr wird der Klemmring mittels mindestens einer ihn im Wesentlichen radial durchsetzenden Klemmschraube gegen die Oberflächen der vom Klemmring umgebenen bzw. getunnelten Drallnuten verspannt. Die Druckbeaufschlagung der Drallnut durch die Klemmschraube erfolgt durch die Zwischenlage eines Klemmschuhs nur mittelbar. Der in der Drallnut einliegende Klemmschuh behindert einen Spaneintritt in den vom Klemmring getunnelten Hohlraum dadurch, dass er das Volumen dieses Hohlraumes praktisch vollständig, jedenfalls weitgehend ausfüllt. Eine weitere Verbesserung gewährleistet Anspruch 2 insoweit, als der Klemmschuh einen Spaneintritt in den getunnelten Hohlraum zwischen Klemmring und Oberfläche einer Drallnut von vornherein verhindert. Das geschieht in besonders wirksamer Weise gemäß Anspruch 3 und weiter gemäß Anspruch 4, weil dadurch eine verbesserte, in Radialrichtung nach außen wirksame Spanführung ermöglicht wird.

Die weiteren Ansprüche 5 bis 9 dienen einer Optimierung der im Wesentlichen radialen Abführung der Späne aus den Drallnuten nach außen, wobei Anspruch 8 noch zusätzlich eine Spanbrechwirkung generieren kann.

Durch Anspruch 10 ist es dem Schaft des Klemmschuhs möglich, sich unter dem radial von außen auf ihn einwirkenden Schraubspanndruck geringfügig elastisch durchzubiegen. Dadurch wird ein die Klemmschraube in Axialrichtung beaufschlagender Reaktionsdruck erzeugt, der auch bei Vibrationseinwirkungen einer Lockerung des Klemmschraubensitzes entgegenwirkt.

Während die Ausführungsform nach Anspruch 11 eine Beaufschlagung des Schaftes 29 des Klemmschuhs 19 bzw. 20 in Axialrichtung der Klemmschraube 6 generiert, wird durch die Ausführungsform gemäß Anspruch 12 zusätzlich eine radiale Druckkomponente auf den Schaft 29 des Klemmschuhs 19 bzw. 20 ausgeübt. Diese radiale Druckkomponente begünstigt eine flächenförmige Anlage des Schaftes 29 des Klemmschuhs 19 bzw. 20 an der Oberfläche der Drallnut 9 bzw. 10.

Die Erfindung wird anhand der Figuren beispielsweise erläutert. Dort zeigen:

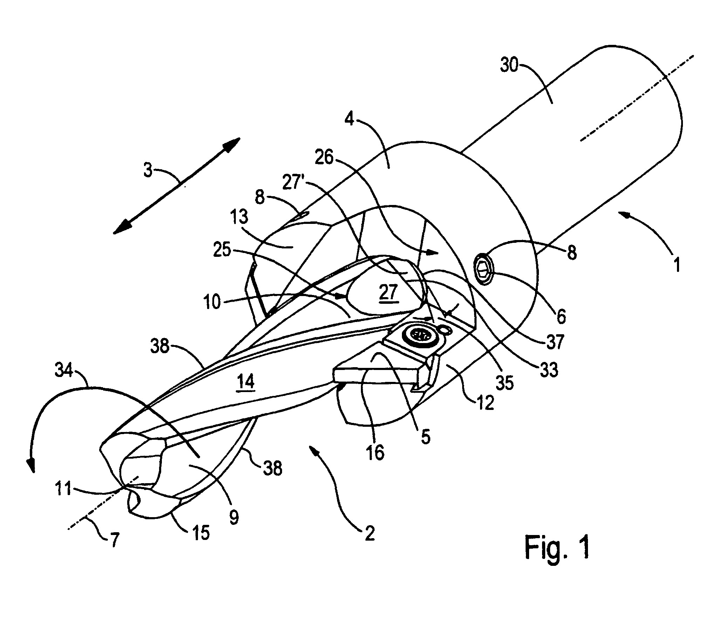

- Fig. 1: eine perspektivische Gesamtansicht des Bohr-Fas-Werkzeuges von der Seite der Bohrerspitze her,

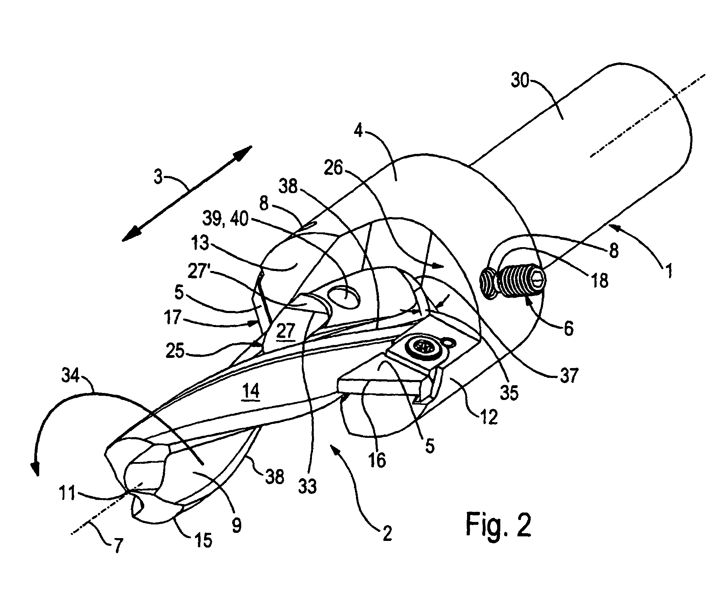

- Fig. 2: eine explosionsartig modifizierte Darstellungsform analog Fig. 1 mit einer vereinzelten Darstellung einer Klemmschraube und des ihr zugeordneten Klemmschuhs,
- Fig. 3: eine Draufsicht auf das vordere Bohrerende mit in einer Drallnut einliegendem Klemmschuh und mit der ihm zugeordneten Klemmschraube - allerdings unter Weglassung des Klemmringes,
- Fig. 4: einen Schnitt entsprechend der Linie IV-IV in Fig. 3,
- Fig. 5: die perspektivische Seitenansicht einer ersten Ausführungsform des Klemmschuhs,
- Fig. 6: eine perspektivische Vorderansicht in Pfeilrichtung VI von Fig. 5,
- Fig. 7: eine perspektivische Draufsicht in Pfeilrichtung VII von Fig. 5,
- Fig. 8: eine Schnittdarstellung entsprechend der Schnittlinie VIII-VIII in Fig. 7,
- Fig. 9-12: Darstellungen analog den Fig. 5-8 einer zweiten Ausführungsform des Klemmschuhs.

Das Bohr-Fas-Werkzeug enthält einen Bohrer 1 mit drallgenutetem Schaftteil 2 und einen das Schaftteil 2 umgebenden, in beliebigen Verstellpositionen in Axialrichtung 3 fixierbaren Klemmring 4 als Halter eines Senkerschneidkörpers 5. Dieser trägt mindestens eine den Klemmring 4 im Wesentlichen radial durchsetzende Klemmschraube 6. Der Klemmring 4 ist an seinem der Bohrerspitze 11 abgewandten Ende hohlzylinder- bzw. rohrförmig ausgestaltet und umgibt den Bohrer 1 einschließlich seines Schaftteiles 2 mit einem Schiebesitz.

Über den Umfang des Klemmringes 4 gleichmäßig verteilt ist eine der Anzahl der Drallnuten 9,10 des Gewindebohrers 1 entsprechende Anzahl von im Wesentlichen radialen den Klemmring durchsetzenden Gewindebohrungen 8 zur Aufnahme jeweils einer Klemmschraube 6 angeordnet. Beim Ausführungsbeispiel sind es zwei Klemmschrauben 6, deren jede zur radialen Beaufschlagung einer der Drallnuten 9 bzw. 10 bestimmt ist. Damit wird der Klemmring 3 in einer beliebigen Axialposition (Axialrichtung 3) auf dem Bohrer 1 festgeklemmt.

Der Klemmring 4 umgibt nur in seinem der Bohrerspitze 11 abgewandten Bereich den Bohrer 1 ringförmig. Dort tunnelt er beide Drallnuten 9,10. Vom Klemmring 4 stehen die beiden Haltevorsprünge 12,13 in Axialrichtung 3 auf die Bohrerspitze 11 vor. Beide Haltevorsprünge 12,13 tangieren dabei mit ihren Innenflanken die beiden Bohrerfreiflächen 14,15. Sie tragen an ihren der Bohrerspitze 11 zugewandten Enden jeweils einen Senkerschneidkörper 5. Dieser tangiert die ihm zugeordnete Bohrerfreifläche 14 bzw. 15 und trägt eine Senkerschneide 16 bzw. 17.

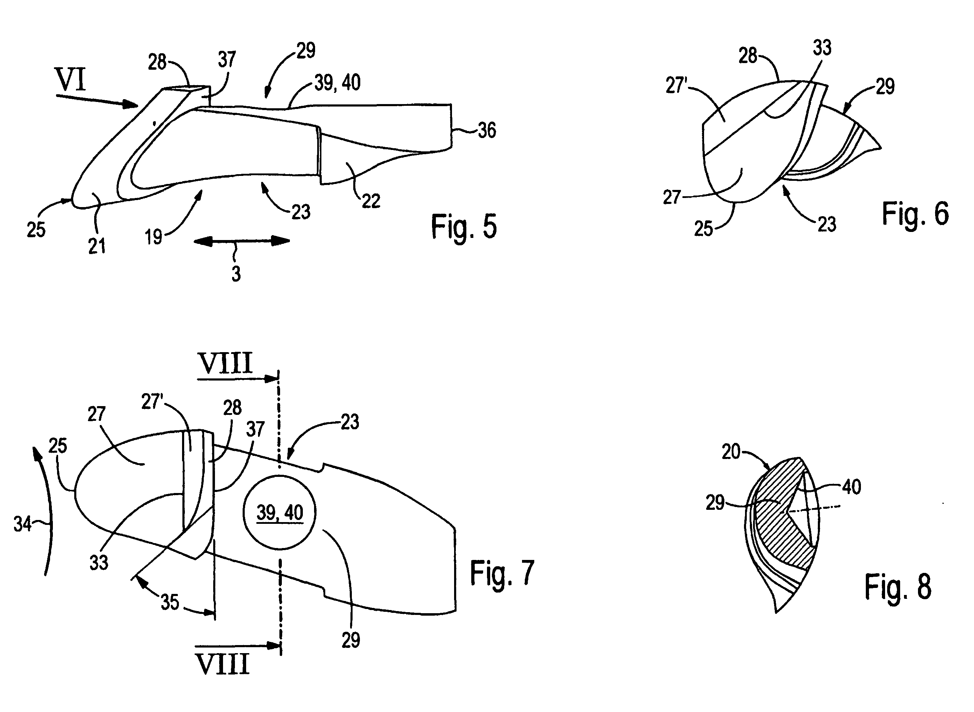

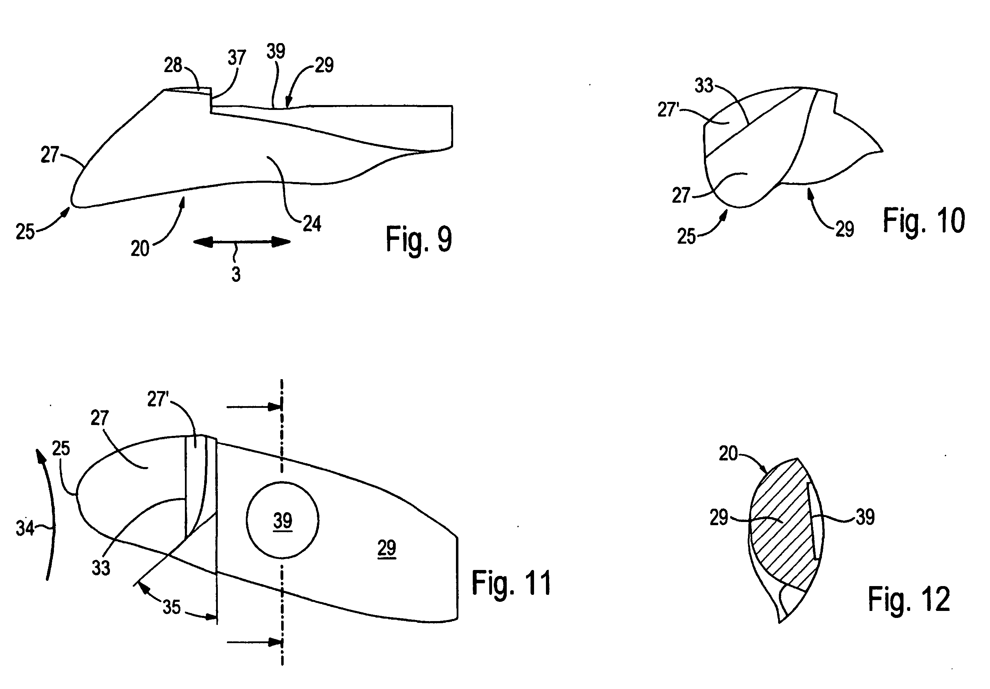

Zwischen dem Druckende 18 einer jeden Klemmschraube 6 und der Oberfläche der ihr zugeordneten Drallnut 9 bzw. 10 ist ein Klemmschuh 19 positioniert. Der Klemmschuh 19 in der Ausführungsform gemäß den Fig. 5-8 ist genauso wie der Klemmschuh 20 in der Ausführungsform der Fig. 9-12 innerhalb der ihm zugeordneten Drallnut 9 bzw. 10 in Axialrichtung 3 längsverschiebbar geführt. Dazu weisen die Klemmschuhe 19,20 auf ihrer den Drallnuten 9 bzw. 10 zugewandten Seiten eine die Längsverschiebebewegung in geführter Form gewährleistende konvexe Oberflächengestalt auf, die etwa ein Positiv zur durch die Drallnuten 9,10 gebildeten konkaven Querschnittsform darstellt. Die der Querschnittsform der Drallnuten 9,10 angepassten Führungsflächen 21 bzw. 22 der Ausführungsform gemäß den Fig. 5-8 sind den beiden Enden des Klemmschuhs 19 zugeordnet und diese Enden sind durch eine radiale Aussparung 23 voneinander separiert. Hingegen ist beim Klemmschuh 20 (Fig. 9-12) die der Drallnut 9,10 zugewandte Führungsfläche 24 einteilig. Sie erstreckt sich über die ganze der Drallnut 9 bzw. 10 zugewandte Oberfläche des Klemmschuhs 20.

Mit seinem in Montagestellung der Bohrerspitze 11 zugewandten Ende 25 steht der Klemmschuh 19,20 über den die jeweilige Drallnut 9,10 tunnelnden Teil des Klemmringes 4, nämlich über die der Bohrerspitze 11 zugewandte Stimflanke 26 des Klemmringes 4 hinaus. Das in Montagestellung über die Stimflanke 26 des Klemmringes 4 hinausstehende Ende 25 des Klemmschuhes 19 bzw. 20 ist als Spanlenkende mit Spanlenkflächen 27,27' wirksam. Das Spanlenkende 25 überdeckt mindestens den Querschnitt der zugeordneten Drallnut 9,10.

Bei den dargestellten Ausführungsformen eines Klemmschuhs 19 bzw. 20 bildet das jeweilige Spanlenkende 25 die der Bohrerspitze 11 in Montagestellung zugewandte Flanke einer gegenüber dem Klemmring 4 wirksamen Distanzrippe 28, welche in Radialrichtung zur Bohrerachse 7 über den vom Klemmring 4 getunnelten Schaft 29 des Klemmschuhs 19 bzw. 20 hinaussteht.

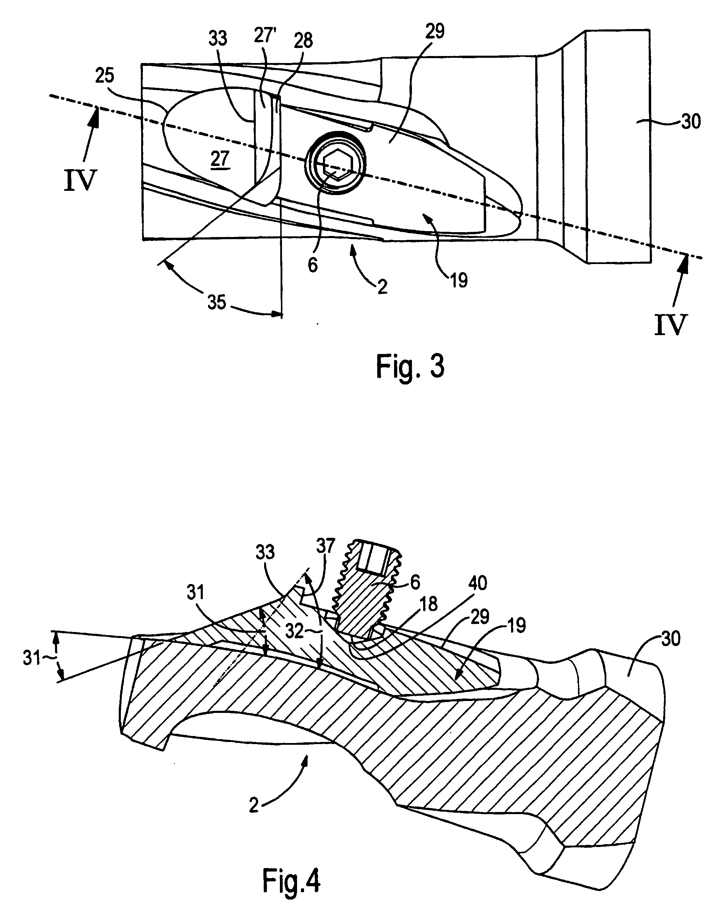

Die Spanlenkfläche 27 des Spanlenkendes 25 des Klemmschuhs 19 bzw. 20 bildet im Wesentlichen, d.h. insbesondere in ihrem der Bohrerspitze 11 zugewandten Bereich, einen spitzen, sich von der Bohrerspitze 11 zum Bohrerschaft 30 hin öffnenden spitzen Winkel 31 mit dem Grund der Drallnut 9 bzw. 10. Die Spanlenkfläche 27 ist in ihrem innerhalb der Drallnut 9 bzw. 10 positionierten Bereich im Wesentlichen eben. Der spitze Winkel 31 vergrößert sich an dem dem Klemmring 4 zugewandten, in Klemmstellung außerhalb der Drallnut 9 bzw. 10 positionierten Ende der Spanlenkfläche 27 zu einem Winkel 32 (Fig. 4). Der Übergang vom Winkel 31 zum Winkel 32 (Fig. 4) ist als Knick 33 ausgestaltet. Der Knick 33 bildet etwa eine Gerade. Er kann aber auch leicht ausgerundet sein.

Die abgeknickte, dem Boden der Drallnut 9,10 abgewandte rückwärtige Spanlenkfläche 27' des Klemmschuhs 19,20 bildet mit der der Stimflanke 26 des Klemmrings 4 zugewandten Gegenflanke 37 der Distanzrippe 28 einen sich in Bohrerdrehrichtung 34 schließenden spitzen Winkel 35. Dadurch erhält die Spanlenkfläche 27' den Charakter einer Spanleitfläche. Diese leitet den von der Spanlenkfläche 27 ablaufenden Span nicht nur radial nach außen, sondern zusätzlich in Bohrerdrehrichtung 34 von der Schneide 38 einer Drallnut 9 bzw. 10 weg. Sie schützt dadurch die Schneide 38 der Drallnut 9 bzw. 10 zusätzlich. Die Distanzrippe 28 ist mit dieser Gegenflanke 37 in Axialrichtung 3 an der Stimflanke 26 des Klemmringes 4 abgestützt bzw. liegt an dieser Stimflanke 26 an.

In die vom Druckende 18 einer Klemmschraube 6 beaufschlagte Oberfläche des Schaftes 29 des Klemmschuhes 19,20 ist eine Andruckfläche 39 für das Druckende 18 der Klemmschraube 6 eingelassen. Die Andruckfläche 39 ist im Wesentlichen eben.

In den Fig. 4 und 8 ist anstelle einer Andruckfläche 39 für die Beaufschlagung seitens der Klemmschraube 6 eine sich in Druckrichtung hinsichtlich ihres Durchmessers verjüngende Vertiefung, beim Ausführungsbeispiel eine Kegelsenkung 40, vorgesehen. Diese sorgt für eine flächenförmige Anlage des Schaftes 29 des Klemmschuhs 19 bzw. 20 an der Oberfläche der Drallnut 9 bzw. 10. Die Beaufschlagung durch die Klemmschraube 6 bewirkt nämlich nicht nur einen axialen Druck, sondern zusätzlich eine radiale Druckkomponente auf den Schaft 29 des Klemmschuhs 19 bzw. 20.

## Patentansprüche

1. Bohr-Fas-Werkzeug mit einem den drallgenuteten Schaftteil (2) eines Bohrers(1) umgebenden und auf diesem in beliebigen axialen Verstellpositionen fixierbaren Klemmring (4) als Halter einer Senkerschneide oder eines Senkerschneidkörpers (5), wobei der Klemmring (4) mittels einer ihn im Wesentlichen radial durchsetzenden Klemmschraube (6) gegen die Oberfläche mindestens einer der von ihm getunnelten Drallnuten (9,10) verspannt ist, **dadurch gekennzeichnet, dass** zwischen der Klemmschraube (6) und der Oberfläche einer Drallnut (9,10) ein Klemmschuh (19,20) positioniert ist.

2. Werkzeug nach Anspruch 1,
**dadurch gekennzeichnet,**
**dass** der Klemmschuh (19,20) in Richtung zur Bohrerspitze (11) mit einem Spanlenkende über den die jeweilige Drallnut (9,10) tunnelnden Teil (26) des Klemmringes (4) hinaussteht.

3. Werkzeug nach Anspruch 2,
**dadurch gekennzeichnet,**
**dass** das Spanlenkende des Klemmschuhs (19,20) mindestens den Querschnitt der zugeordneten Drallnut (9,10) überdeckt.

4. Werkzeug nach einem der Ansprüche 1 bis 3,
**dadurch gekennzeichnet,**
**dass** das Spanlenkende (25) des Klemmschuhs (19,20) die Flanke einer gegenüber dem Klemmring (4) wirksamen Distanzrippe (28) bildet, die in Radialrichtung über den vom Klemmring (4) getunnelten Schaft (29) des Klemmschuhs (19,20) hinaussteht.

5. Werkzeug nach einem der Ansprüche 1 bis 4,
**dadurch gekennzeichnet,**
**dass** die spanlenkende Oberfläche (27) des Spanlenkendes (25) des Klemmschuhs (19,20) einen spitzen, sich von der Bohrerspitze (11) zum Bohrerschaft (30) hin öffnenden Winkel (31) mit dem Grund der Drallnut (9,10) bildet.

6. Werkzeug nach Anspruch 5,
**dadurch gekennzeichnet,**
**dass** die Spanlenkfläche (27) in ihrem innerhalb der Drallnut (9,10) positionierten Bereich im Wesentlichen eben ist.

7. Werkzeug nach Anspruch 5 oder 6,
**gekennzeichnet durch**
eine Vergrößerung (33) des Winkelmaßes (31,32) an dem dem Klemmring (4) zugewandten, in Klemmstellung außerhalb der Drallnut (9,10) positionierten Ende der Spanlenkfläche (27).

8. Werkzeug nach Anspruch 7,
**gekennzeichnet durch**
eine knickartige (33) Vergrößerung des Winkelmaßes.

9. Werkzeug nach einem oder mehreren der vorhergehenden Ansprüche,
**dadurch gekennzeichnet,**
**dass** die Spanlenkfläche (27') an ihrem dem Klemmring (4) zugewandten, über die Drallnut (9,10) hinausstehenden Ende mit der Gegenflanke (37) der Distanzrippe (28) einen spitzen, sich in Bohrerdrehrichtung (34) schließenden Winkel (35) bildet.

10. Werkzeug nach einem der Ansprüche 1 bis 8,
**dadurch gekennzeichnet,**
**dass** die Anlagefläche (21,22) des Klemmschuhs (19) an bzw. in der zugeordneten Drallnut (9,10) zwischen ihrem Spanlenkende (25) und ihrem anderen Ende (2) ringsegmentförmig ausgespart ist und einen Radialabstand zur Wandfläche der Drallnut (9,10) einhält.

11. Werkzeug nach einem der Ansprüche 1 bis 10,
**gekennzeichnet durch**
eine in die dem Angriff der Klemmschraube (6) zugewandte Oberfläche des Klemmschuhs (19,20) eingelassene Andruckfläche (39) für die Klemmschraube (6).

12. Werkzeug nach einem der Ansprüche 1 bis 10,
**gekennzeichnet durch**
eine in die den Angriff der Klemmschraube (6) zugewandte Oberfläche des Klemmschuhs (19,20) eingelassenen, sich in Druckrichtung hinsichtlich ihres Durchmessers verjüngende Vertiefung, insbesondere Kegelsenkung (40).

## Claims

1. Drilling/chamfering tool having a clamping ring (4) which surrounds the helically fluted shank part (2) of a drill (1), can be fixed to the latter in any desired axial adjustment position and is intended as a holder of a countersink cutting edge or a countersink cutting body (5), the clamping ring (4), by means of a clamping screw (6) which passes through it essentially radially, being restrained against the surface of at least one of the helical flutes (9, 10) enclosed by it, **characterized in that** a clamping shoe (19, 20) is positioned between the clamping screw (6) and the surface of a helical flute (9, 10).

2. Tool according to Claim 1, **characterized in that** the clamping shoe (19, 20), with a chip-control end, projects in the direction of the drill point (11) beyond that part (26) of the clamping ring (4) which encloses the respective helical flute (9, 10).

3. Tool according to Claim 2, **characterized in that** the chip-control end of the clamping shoe (19, 20) covers at least the cross section of the associated helical flute (9, 10).

4. Tool according to one of Claims 1 to 3, **characterized in that** the chip-control end (25) of the clamping shoe (19, 20) forms the flank of a distance rib (28) which is effective relative to the clamping ring (4) and projects in the radial direction beyond the shank (29), enclosed by the clamping ring (4), of the clamping shoe (19, 20).

5. Tool according to one of Claims 1 to 4, **characterized in that** the chip-control surface (27) of the chip-control end (25) of the clamping shoe (19, 20) forms an acute angle (31) with the root of the helical flute (9, 10), this acute angle (31) opening from the drill point (11) towards the drill shank (30).

6. Tool according to Claim 5, **characterized in that** the chip-control surface (27) is essentially flat in its region positioned inside the helical flute (9, 10).

7. Tool according to Claim 5 or 6, **characterized by** an increase (33) in the angular dimension (31, 32) at that end of the chip-control surface (27) which faces the clamping ring (4) and is positioned outside the helical flute (9, 10) in the clamping position.

8. Tool according to Claim 7, **characterized by** a bend-like (33) increase in the angular dimension.

9. Tool according to one or more of the preceding claims, **characterized in that** the chip-control surface (27'), at its end facing the clamping ring (4) and projecting beyond the helical flute (9, 10), forms an acute angle (35), closing in the drill rotation direction (34), with the opposite flank (37) of the distance rib (28).

10. Tool according to one of Claims 1 to 8, **characterized in that** the bearing surface (21, 22) of the clamping shoe (19) on or in the associated helical flute (9, 10) is recessed in a ring-segment shape between its chip-control end (25) and its other end (36) and maintains a radial distance from the wall surface of the helical flute (9, 10).

11. Tool according to one of Claims 1 to 10, **characterized by** a pressure surface (39) for the clamping screw (6), this pressure surface (39) being sunk in that surface of the clamping shoe (19, 20) which faces the application of the clamping screw (6).

12. Tool according to one of Claims 1 to 10, **characterized by** a recess, in particular a conical depression (40), sunk in that surface of the clamping shoe (19, 20) which faces the application of the clamping screw (6) and narrowing in its diameter in the direction of pressure.

## Revendications

1. Outil de perçage et de chanfreinage, comprenant un anneau de serrage (4) qui entoure une partie de corps (2) pourvue de goujures en hélice d'un foret (1), peut être fixé sur celui-ci dans des positions axiales de réglage quelconques, et faisant office de support d'un tranchant de coupe de chanfreinage et de lamage ou d'un corps de coupe (5) de chanfreinage et de lamage, l'anneau de serrage (4) étant serré, au moyen d'une vis de serrage (6) qui le traverse sensiblement de manière radiale, sur la surface d'au moins une des goujures en hélice (9, 10) qu'il recouvre en tunnel,
**caractérise en ce qu'**entre la vis de serrage (6) et la surface d'une goujure en hélice (9, 10) est positionné un patin de serrage (19, 20).

2. Outil selon la revendication 1, **caractérisé en ce que** le patin de serrage (19, 20), fait saillie en direction de la pointe du foret (11) avec une extrémité de guidage de copeaux, par-delà la partie (26) de l'anneau de serrage (4), qui recouvre en tunnel la goujure en hélice (9, 10) respectivement considérée.

3. Outil selon la revendication 2, **caractérisé en ce que** l'extrémité de guidage de copeaux, du patin de serrage (19, 20) couvre au moins la section transversale de la goujure en hélice (9, 10) associée.

4. Outil selon l'une des revendications 1 à 3, **caractérisé en ce que** l'extrémité de guidage de copeaux (25) du patin de serrage (19, 20) forme le flanc d'une nervure d'espacement (28) qui agit par rapport à l'anneau de serrage (4), et fait saillie, dans la direction radiale, au-delà du corps (29) du patin de serrage (19, 20) surmonté en tunnel par l'anneau de serrage (4).

5. Outil selon l'une des revendications 1 à 4, **caractérisé en ce que** la surface de guidage de copeaux (27) de l'extrémité de guidage de copeaux (25) du patin de serrage (19, 20) forme avec le fond de la goujure en hélice (9, 10), un angle aigu (31) s'ouvrant de la pointe de foret (11) vers le corps de foret ou queue de foret (30).

6. Outil selon la revendication 5, **caractérisé en ce que** la surface de guidage de copeaux (27) est sensiblement plane dans sa zone positionnée à l'intérieur de la goujure en hélice (9, 10).

7. Outil selon la revendication 5 ou 6, **caractérisé par** un agrandissement (33) de la mesure d'angle (31, 32) à l'extrémité de la surface de guidage de copeaux (27), qui est dirigée vers l'anneau de serrage (4) et est positionnée à l'extérieur de la goujure en hélice (9, 10), dans l'état serré.

8. Outil selon la revendication 7, **caractérisé par** un agrandissement en forme de brisure de la mesure d'angle.

9. Outil selon l'une ou plusieurs des revendications précédentes, **caractérisé en ce que** la surface de guidage de copeaux (27') forme, à son extrémité dirigée vers l'anneau de serrage (4) et faisant saillie par-dessus la goujure en hélice (9, 10), avec le flanc opposé (37) de la nervure d'espacement (28), un angle aigu (35) qui se ferme dans la direction du sens de rotation (34) du foret.

10. Outil selon l'une des revendications 1 à 8, **caractérisé en ce que** la surface d'appui (21, 22) du patin de serrage (19) contre et dans la goujure en hélice (9, 10) associée, est évidée entre son extrémité de guidage de copeaux (25) et son autre extrémité (2) en formant des segments annulaires, et respecte ainsi un espacement radial par rapport à la surface de paroi de la goujure en hélice (9, 10).

11. Outil selon l'une des revendications 1 à 10, **caractérisé par** une surface d'appui (39) destinée à la vis de serrage (6) et réalisée en affleurement dans la surface du patin de serrage (19, 20), qui est dirigée vers l'attaque de la vis de serrage (6).

12. outil selon l'une des revendications 1 à 10, **caractérisé par** un creux dont le diamètre se rétrécit dans la direction de la compression, notamment un lamage conique (40), qui est réalisé en affleurement dans la surface du patin de serrage (19, 20), qui est dirigée vers l'attaque de la vis de serrage (6).
